# EUROPÄISCHE PATENTSCHRIFT

(11) **EP 3 399 182 B1**
(45) Veröffentlichungstag und Bekanntmachung des Hinweises auf die Patenterteilung: **11.11.2020**
(21) Anmeldenummer: 17169755.0
(22) Anmeldetag: 05.05.2017
(51) Int. Cl.: F03D 1/06

(54) **GERÄUSCHARME ROTORBLATTSPITZE**
LOW NOISE ROTOR BLADE TIP
EXTRÉMITÉ DE PALE SILENCIEUSE

(43) Veröffentlichungstag der Anmeldung: 07.11.2018
(73) Patentinhaber: Nordex Energy GmbH, 22419 Hamburg (DE)
(72) Erfinder: Doosttalab, Mehdi, 22850 Norderstedt (DE)
(74) Vertreter: Hauck Patentanwaltspartnerschaft mbB

(56) Entgegenhaltungen:
- EP-A2- 2 196 665
- EP-A2- 2 770 197
- DE-A1-102005 019 905
- US-A1- 2008 193 292

## Beschreibung

Die Erfindung betrifft eine Rotorblattspitze für ein Windenergieanlagenrotorblatt sowie ein Windenergieanlagenrotorblatt mit einer solchen Rotorblattspitze.

Aerodynamische Untersuchungen an Rotorblättern von Windenergieanlagen haben ergeben, dass die aerodynamische Effizienz insbesondere im Bereich der Rotorblattspitze verringert sein kann. Grund hierfür ist in der Regel eine geringe Reynolds-Zahl an der Rotorblattspitze, die zu einem Ablösen der laminaren Luftströmung von der Rotorblattoberfläche und zur Bildung von instabilen Wirbelströmen führt. Insbesondere bilden sich dabei nahe der Profilnasenkante des Rotorblatts Ablöseblasen. Häufig wird die laminare Luftströmung dabei über einen großen Bereich von der Rotorblattoberfläche abgelöst, was zu einer geringeren Energieeffizienz führt. Derartige Strömungsabrisse und die damit verbundenen Turbulenzen sind die Hauptursache für unerwünschte Lärmentwicklung im Betrieb einer Windenergieanlage.

Um Strömungsabrisse zu vermeiden, kann die unmittelbar an der Rotorblattoberfläche verlaufende, laminare Luftströmung gezielt in eine turbulente Luftströmung gewandelt werden, bevor sich Ablöseblasen bilden können. Eine derartige turbulente Luftströmung bringt mehr Energie in die das Rotorblatt umgebende Grenzschicht ein und erzeugt oberhalb der (Mikro-)Turbulenzen einen stabileren, laminaren Luftstrom. Es ist bekannt, zu diesem Zweck Einbuchtungen in die Oberfläche von Rotorblattschalen einzubringen bzw. mit Einbuchtungen versehene Folien nachträglich auf die Rotorblattschalen aufzubringen. Rotorblattschalen mit derartigen Unebenheiten werden beispielsweise in EP 1 469 198 A1, WO 2014/0237391, WO 2012/02889081 sowie DE 10 2006 054 683 A1 beschrieben.

Aus DE 10 2005 019 905 A1 ist ein Rotorblatt bekannt, welches an einer Außenseite eine aus einem Aluminiumschaum bestehende porige Oberfläche aufweist. Der Erfindung liegt die Aufgabe zugrunde, eine Rotorblattspitze für ein Windenergieanlagenrotorblatt zur Verfügung zu stellen, die einfach herstellbar und widerstandsfähig ist sowie störende Geräuschentwicklung vermeidet.

Die Erfindung löst die Aufgabe durch den Gegenstand von Anspruch 1. Vorteilhafte Ausgestaltungen sind Gegenstand der Unteransprüche.

Diese Aufgabe wird gelöst durch eine Rotorblattspitze für ein Windenergieanlagenrotorblatt, wobei die Rotorblattspitze aus Metall gefertigt ist und eine von dem Metall gebildete Oberfläche der Rotorblattspitze einen rauen Oberflächenabschnitt aufweist.

Erfindungsgemäß ist eine Rotorblattspitze aus Metall gefertigt, insbesondere aus Aluminium. Die Rotorblattspitze kann dabei zur Verbindung mit der Blattschale eines Windenergieanlagenrotorblatts ausgebildet sein, beispielsweise zum Verkleben mit der Blattschale. Die metallene Rotorblattspitze kann als Blitzrezeptor dienen. Insbesondere kann die Rotorblattspitze das aerodynamische Profil der Blattschale fortsetzen. Erfindungsgemäß erstreckt sich über zumindest einen Teil der Oberfläche der metallenen Rotorblattspitze ein rauer Oberflächenabschnitt. Die metallene Oberfläche der Rotorblattspitze weist also eine Rauheit auf. Als Rauheit werden hierbei Unebenheiten in der Oberfläche der Rotorblattspitze verstanden. Der raue Oberflächenabschnitt kann insbesondere gegenüber der ihn umgebenden Oberflächenabschnitte der Rotorblattspitze uneben sein.

Aufgrund des rauen Oberflächenabschnitts kann eine Strömungsablösung der entlang der Oberfläche der Rotorblattspitze strömenden Luftströmung vermieden werden. Der raue Oberflächenabschnitt erzeugt hierbei gezielt geringfügige Turbulenzen in der laminaren Luftströmung. Hierdurch bleibt die Luftströmung an der Oberfläche der Rotorblattspitze haften, wobei die oberhalb einer erzeugten turbulenten Grenzschicht verlaufende Strömung im Wesentlichen laminar bleibt. Der raue Oberflächenabschnitt in der metallenen Rotorblattspitze eliminiert somit die wesentliche Quelle der Geräuschentwicklung im Betrieb von Windenergieanlagen. Die Erfinder haben erkannt, dass es hierfür ausreichend ist, lediglich eine Rotorblattspitze abschnittsweise mit einer rauen Oberfläche zu versehen, anstatt ein vollständiges Rotorblatt derart aufzubereiten. Da erfindungsgemäß die die Rauheit bildenden Unebenheiten direkt in das Metall der Rotorblattspitze eingebracht sind, ist die erfindungsgemäße Rotorblattspitze einfacher herzustellen als die aus dem Stand der Technik bekannten Einbuchtungen in üblicherweise aus Faserverbundmaterialien gefertigten Rotorblattschalen. Zudem ist der raue Oberflächenabschnitt widerstandsfähiger gegenüber der Witterung, wie beispielsweise gegenüber Wind, Regen oder Sonneneinstrahlung. Auch nach mehreren Blitzeinschlägen kann die metallene Rotorblattspitze ihre Rauheit und damit ihre aerodynamischen Eigenschaften beibehalten. Dies ist insbesondere gegenüber den aus dem Stand der Technik bekannten, auf die Blattschale eines Rotorblatts aufgeklebten Folien von Vorteil, da diese durch die Witterung besonders stark in Mitleidenschaft gezogen werden. So kommt es häufig zur Ablösung der Folien, was nicht nur die gezielte Erzeugung von Turbulenzen verhindert, sondern auch die aerodynamischen Eigenschaften des Rotorblattes beeinträchtigt und mit einer unerwünschten Geräuschentwicklung einhergeht.

Erfindungsgemäß ist der raue Oberflächenabschnitt der Rotorblattspitze durch eine Vielzahl in die Oberfläche der Rotorblattspitze eingebrachter Vertiefungen und/oder Erhöhungen gebildet. Die Unebenheit des rauen Oberflächenabschnitts kann also durch in die Oberfläche der Rotorblattspitze eingebrachte Vertiefungen, Erhöhungen oder durch eine Kombination von Vertiefungen und Erhöhungen gebildet sein. Die Vertiefungen und/oder Erhöhungen können bereits bei der Herstellung der metallenen Rotorblattspitze integral mit dieser geformt sein. Auch können die Vertiefungen und/oder Erhöhungen nachträglich in die Oberfläche der metallenen Rotorblattspitze eingebracht werden, beispielsweise in einem spanenden Verfahren oder einem anderen Formgebungsverfahren. Die Rauheit der Oberfläche kann dabei insbesondere als mittlerer Abstand der Vertiefungen und/oder Erhöhungen von einer Bezugsebene definiert sein. Die Bezugsebene kann beispielsweise dem aerodynamischen Profil der Rotorblattspitze folgen, insbesondere der den rauen Oberflächenabschnitt umgebenden Oberfläche der metallenen Rotorblattspitze. Die Bezugsebene kann insbesondere eine gedachte Mittelebene sein, die eine durch die Erhöhungen/Vertiefungen gebildete Kontur derart schneidet, dass die Summe der durch die Erhöhungen/Vertiefungen bedingten Abweichungen der Kontur gegenüber der Mittelebene minimal wird.

Nach einer Ausgestaltung erstrecken sich die Vertiefungen zwischen 0,1 mm und 1 mm in die Oberfläche der Rotorblattspitze hinein. Auch können sich die Erhöhungen zwischen 0,1 mm und 1 mm aus der Oberfläche der Rotorblattspitze heraus erstrecken. Derart geringfügige Unebenheiten sind bereits ausreichend, um die erwünschten Turbulenzen zu erzeugen und einen Strömungsabriss zu vermeiden.

Nach einer weiteren Ausgestaltung sind die Vertiefungen und/oder Erhöhungen linsen- oder halbkugelförmig oder quaderförmig ausgebildet. Die Vertiefungen können sich also beispielsweise halbkugelförmig in die Oberfläche der Rotorblattspitze hinein erstrecken oder die Erhöhungen halbkugelförmig aus der Oberfläche heraus. Entsprechendes gilt für die linsen- oder quaderförmig ausgebildeten Unebenheiten.

In einer Ausgestaltung sind die Vertiefungen und/oder Erhöhungen in einer Zick-Zack-Form angeordnet. Der raue Oberflächenabschnitt kann also entlang einer Zick-Zack-Linie verlaufen.

Erfindungsgemäß ist der raue Oberflächenabschnitt streifenförmig in einem gleichmäßigen Abstand von einer Profilnasenkante angeordnet. Die Länge des streifenförmigen Oberflächenabschnitts kann beispielsweise im Bereich von 10 cm bis 100 cm liegen. Der raue Oberflächenabschnitt kann sich insbesondere entlang der gesamten Länge der metallischen Rotorblattspitze erstrecken. Der raue Oberflächenabschnitt ist streifenförmig, da seine Ausdehnung entlang der Länge der Rotorblattspitze größer ist als entlang der senkrecht zu der Länge verlaufenden Profilsehne. Beispielsweise kann der streifenförmige Oberflächenabschnitt eine Breite in Richtung der Profilsehne im Bereich von 1 cm bis 3 cm aufweisen. Ein streifenförmiger rauer Oberflächenabschnitt ist bereits ausreichend, um einen Strömungsabriss und damit störende Geräuschentwicklung zu vermeiden. Ein solcher streifenförmiger Oberflächenabschnitt ist besonders effizient und mit geringem Aufwand herstellbar. Die Anordnung des rauen Oberflächenabschnitts in einem gleichmäßigen Abstand von der Profilnasenkante bedeutet die Anordnung auf gleicher Profilsehnenposition. Wie oben erläutert, ist eine Anordnung des rauen Oberflächenabschnitts davon abhängig, bei welcher Position üblicherweise eine Strömungsablösung auftreten würde. Dies ist insbesondere abhängig von dem Profilverlauf der Rotorblattspitze sowie dessen Anstellwinkel gegenüber dem Wind.

Nach einer weiteren Ausgestaltung weist die Rotorblattspitze einen sich entlang einer Profilnasenkante erstreckenden Fortsatz auf, wobei sich der raue Oberflächenabschnitt zumindest teilweise entlang des Fortsatzes erstreckt. Im an ein Windenergieanlagenrotorblatt montierten Zustand der Rotorblattspitze erstreckt sich der Fortsatz dabei in Richtung der Blattschale des Windenergieanlagenrotorblatts, im an eine Rotornabe montierten Zustand also in Richtung zu der Rotornabe hin. Der Fortsatz erstreckt sich somit im Wesentlichen entlang der Länge der Rotorblattspitze. Da sich auch der raue Oberflächenabschnitt zumindest teilweise entlang des Fortsatzes erstreckt, sind die aerodynamischen Eigenschaften der Rotorblattspitze auch im Bereich des Fortsatzes verbessert; insbesondere wird so eine unerwünschte Geräuschentwicklung vermindert. Gegenüber einer aufgerauten Oberfläche der Blattschale eines an die Rotorblattspitze anschließenden Windenergieanlagenrotorblatts ergeben sich auch hier die oben erwähnten Vorteile der einfacheren Herstellung sowie höheren Widerstandsfähigkeit des rauen Abschnitts.

Nach einer Ausgestaltung verläuft der raue Oberflächenabschnitt auf der Saugseite und/oder auf der Druckseite der Rotorblattspitze. Der raue Oberflächenabschnitt kann also lediglich auf der Saugseite oder lediglich auf der Druckseite angeordnet sein. Auch kann auf sowohl auf der Druckseite wie auch auf der Saugseite jeweils ein rauer Oberflächenabschnitt angeordnet sein. Insbesondere kann sich der raue Oberflächenabschnitt über eine Profilnasenkante der Rotorblattspitze hinweg auf Saugseite und Druckseite erstrecken. Der raue Oberflächenabschnitt kann also beispielsweise abhängig vom Profil der Rotorblattspitze auf der Seite angeordnet sein, an der am ehesten ein Strömungsabriss auftritt. Ist der raue Oberflächenabschnitt dabei auf der Saugseite sowie auf der Druckseite angeordnet, kann auf beiden Seiten der Rotorblattspitze ein Strömungsabriss vermieden werden. Insbesondere kann so unabhängig vom Anstellwinkel, also unabhängig von der Stellung des Rotorblattes relativ zum anströmenden Wind, ein Strömungsabriss im Wesentlichen vermieden werden.

Erfindungsgemäß ist der raue Oberflächenabschnitt in einem Metallgießverfahren gemeinsam mit der Rotorblattspitze hergestellt. Die metallene Rotorblattspitze kann also gegossen werden, wobei durch entsprechende Ausbildung der Gießform der raue Oberflächenabschnitt direkt in die metallene Oberfläche der Rotorblattspitze eingebracht wird. Eine derartige Herstellung des rauen Oberflächenabschnitts ist nicht nur besonders einfach, sondern erzeugt auch einen besonders widerstandsfähigen Oberflächenabschnitt. Weiterhin ermöglicht das Gießverfahren die Herstellung beliebiger, auch komplexer Unebenheiten, deren Position an der Rotorblattspitze exakt reproduzierbar ist. So können insbesondere die erwähnten Erhöhungen nur durch ein solches Gießverfahren einfach hergestellt werden. Gegenüber einer nachträglichen Aufrauhung des Oberflächenabschnitts kann beim Gießverfahren ein Arbeitsschritt eingespart werden. Insbesondere zeigt sich hier der Vorteil gegenüber dem nachträglichen Einbringen von Vertiefungen oder Erhöhungen in die Blattschale eines Rotorblatts.

Die Erfindung betrifft weiterhin ein Windenergieanlagenrotorblatt mit einer Rotorblattspitze gemäß den obigen Ausführungen. Die Rotorblattspitze ist nach einer Ausgestaltung auswechselbar mit einer Blattschale des Windenergieanlagenrotorblatts verbunden. Die Blattschale kann dabei insbesondere aus Faserverbundwerkstoffen gebildet sein und aus zwei Schalenhälften bestehen. Bei der Rotorblattspitze kann es sich insbesondere um einen Blitzrezeptor handeln, der nach Überschreiten seiner Lebenszeit problemlos auch im Betrieb der Windenergieanlage ausgewechselt werden kann.

Die Erfindung wird im Folgenden anhand von Figuren erläutert. Es zeigen:
- Figur 1a: eine Draufsicht auf ein Rotorblatt mit einer Rotorblattspitze ohne rauen Oberflächenabschnitt,
- Figur 1b: eine Schnittansicht der Rotorblattspitze aus Fig. 1a,
- Figur 2a: eine Draufsicht auf ein Rotorblatt mit einer Rotorblattspitze mit einem rauen Oberflächenabschnitt,
- Figur 2b: eine Schnittansicht der Rotorblattspitze aus Fig. 2a,
- Figur 3a: eine Draufsicht auf ein Rotorblatt mit einer Rotorblattspitze nach einer ersten Ausgestaltung,
- Figur 3b: eine Draufsicht auf ein Rotorblatt mit einer Rotorblattspitze nach einer zweiten Ausgestaltung,
- Figur 4a: eine Schnittansicht einer Rotorblattspitze mit in die Oberfläche der Rotorblattspitze eingebrachten Erhöhungen,
- Figur 4b: eine Schnittansicht durch eine Rotorblattspitze mit in die Oberfläche der Rotorblattspitze eingebrachten Vertiefungen,
- Figur 4c: eine Schnittansicht einer Rotorblattspitze mit in die Oberfläche der Rotorblattspitze eingebrachten Vertiefungen und Erhöhungen,
- Figur 5a: eine Draufsicht auf eine Rotorblattspitze mit halbkugelförmigen Unebenheiten,
- Figur 5b: eine Draufsicht auf eine Rotorblattspitze mit in Zick-Zack-Form angeordneten Unebenheiten, und
- Figur 5c: eine Draufsicht auf eine Rotorblattspitze mit quaderförmigen Unebenheiten.

Soweit nichts anderes angegeben ist, bezeichnen in den Figuren gleiche Bezugszeichen gleiche Gegenstände.

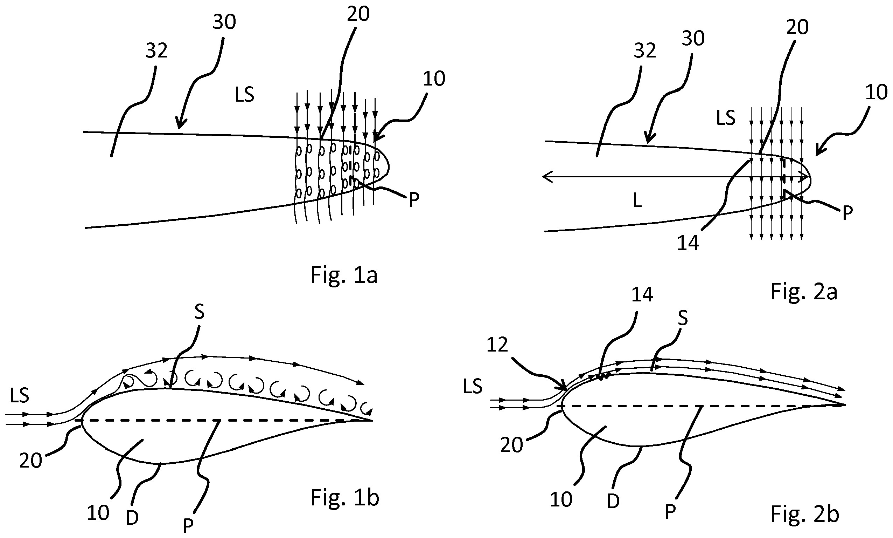

In den Figuren 1a und 1b ist ein Windenergieanlagenrotorblatt 30 mit einer Blattschale 32 und einer mit der Blattschale 32 verbundenen Rotorblattspitze 10 aus Metall dargestellt. Die Blattschale 32 kann insbesondere aus zwei Blattschalenhälften bestehen. Zudem ist eine auf eine Profilnasenkante 20 des Rotorblatts 30 auftreffende Luftströmung LS ersichtlich, die sich bereits nach kurzem Verlauf entlang der Profilsehne P von einer Oberfläche 12 der Rotorblattspitze 10 ablöst. Hierbei bilden sich ersichtlich Ablösewirbel auf der Saugseite S.

In den Figuren 2a und 2b ist die metallene Rotorblattspitze 10 mit einem rauen Oberflächenabschnitt 14 versehen, der sich in der Nähe der Profilnasenkante 20 streifenförmig entlang der Länge L in einem gleichmäßigen Abstand von der Profilnasenkante 20 erstreckt. Wie insbesondere in Fig. 2b deutlich wird, verhindert der raue Oberflächenabschnitt 14 einen Strömungsabriss der Luftströmung LS. Hierbei entstehen durch den rauen Oberflächenabschnitt 14 in der die Rotorblattspitze 10 unmittelbar umgebenden Grenzschicht Mikroturbulenzen (nicht dargestellt). Der raue Oberflächenabschnitt 14 ist in Fig. 2b durch Erhöhungen und Vertiefungen gegenüber der Oberfläche 12 der Rotorblattspitze gebildet. Grundsätzlich kann auch die Druckseite D einen nicht dargestellten weiteren rauen Oberflächenabschnitt aufweisen.

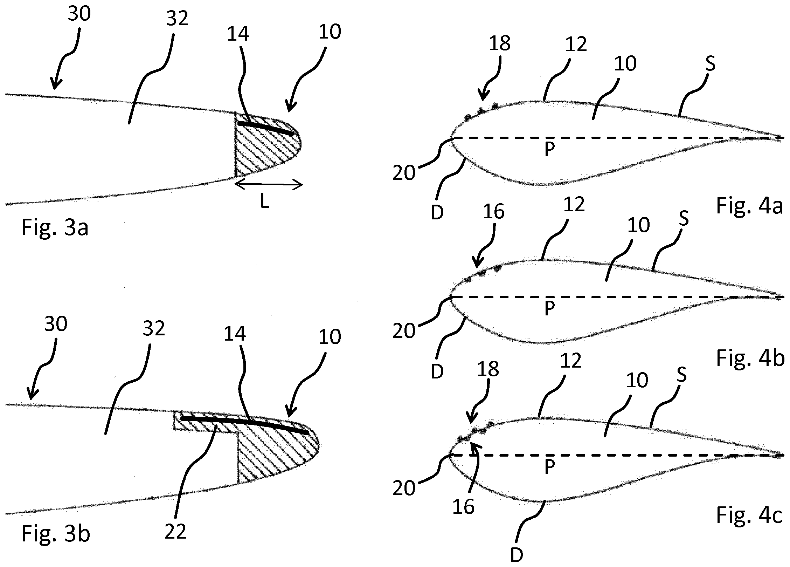

Die metallene Rotorblattspitze 10 kann sich beispielsweise, wie in Fig. 3a dargestellt, über eine gleichmäßige Länge L entlang der Oberfläche 12 der Rotorblattspitze 10 erstrecken oder wie in Fig. 3b dargestellt, einen Fortsatz 22 aufweisen, der sich noch weiter in Richtung der Blattschale 32 erstreckt. Der raue Oberflächenabschnitt erstreckt sich in diesem Fall auch über den Fortsatz 22.

Die Figuren 4a bis 4c zeigen in die Oberfläche 12 der Rotorblattspitze 10 eingebrachte Vertiefungen 16 bzw. Erhöhungen 18. Insbesondere die Erhöhungen 18 sind dabei durch ein Gießverfahren besonders einfach herstellbar. In den dargestellten Ausführungen ist der raue Oberflächenabschnitt auf der Saugseite angeordnet. Der raue Oberflächenabschnitt kann aber auch auf der Druckseite angeordnet sein oder auf der Druck- und Saugseite.

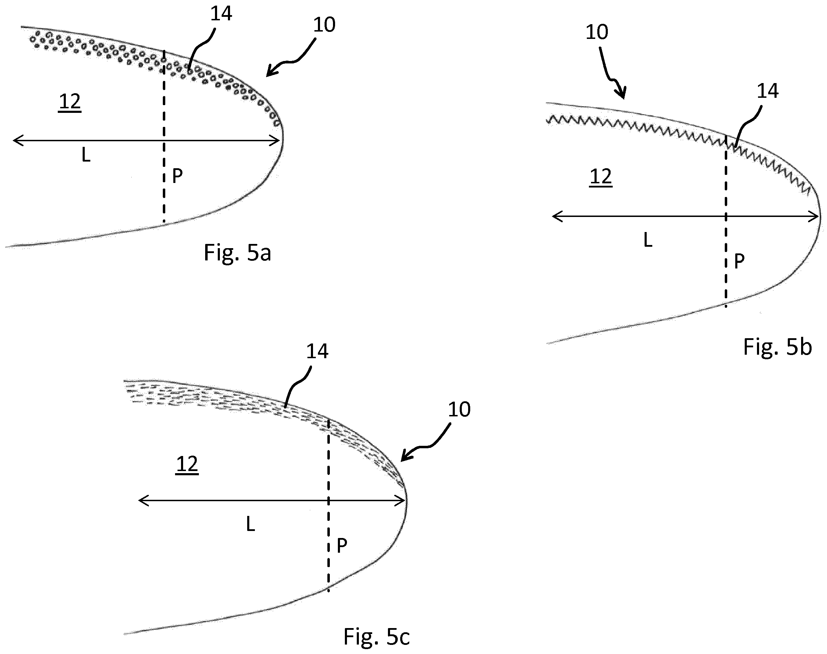

In Fig. 5a ist ein streifenförmiger, rauer Oberflächenabschnitt 14 gezeigt, der durch eine Vielzahl in die Oberfläche 12 der Rotorblattspitze 10 eingebrachte halbkugelförmige Vertiefungen bzw. Erhöhungen gebildet ist. Fig. 5c zeigt einen entsprechenden streifenförmigen Oberflächenabschnitt 14 mit quaderförmigen Erhöhungen bzw. Vertiefungen. In Fig. 5b ist der streifenförmige Oberflächenabschnitt 14 durch quaderförmige Vertiefungen oder Erhöhungen gebildet, die in einem Winkel zueinander stehen und in einer Zick-Zack-Form verlaufen. Der streifenförmige Oberflächenabschnitt 14 weist hierbei eine Breite in Richtung der Profilsehen P im Bereich von ca. 1 cm bis 3 cm auf und ist im Bereich der ersten 10% der Länge der Profilsehne P angeordnet.

### Bezugszeichenliste

- 10: Rotorblattspitze
- 12: Oberfläche
- 14: rauer Oberflächenabschnitt
- 16: Vertiefungen
- 18: Erhöhungen
- 20: Profilnasenkante
- 22: Fortsatz
- 30: Windenergieanlagenrotorblatt
- 32: Blattschale
- P: Profilsehne
- L: Länge
- S: Saugseite
- D: Druckseite
- LS: Luftströmung

## Patentansprüche

1. Rotorblattspitze für ein Windenergieanlagenrotorblatt (30), wobei die Rotorblattspitze (10) aus Metall gefertigt ist und eine von dem Metall gebildete Oberfläche (12) der Rotorblattspitze (10) einen rauen Oberflächenabschnitt (14) aufweist, **dadurch gekennzeichnet, dass** der raue Oberflächenabschnitt (14) streifenförmig in einem gleichmäßigen Abstand von einer Profilnasenkante (20) angeordnet ist.

2. Rotorblattspitze nach Anspruch 1, **dadurch gekennzeichnet, dass** der raue Oberflächenabschnitt (14) der Rotorblattspitze (10) durch eine Vielzahl in die Oberfläche (12) der Rotorblattspitze (10) eingebrachter Vertiefungen (16) und/oder Erhöhungen (18) gebildet ist.

3. Rotorblattspitze nach Anspruch 2, **dadurch gekennzeichnet, dass** sich die Vertiefungen (16) zwischen 0,1 mm und 1 mm in die Oberfläche (12) der Rotorblattspitze (10) hinein erstrecken und/oder dass sich die Erhöhungen (18) zwischen 0,1 mm und 1 mm aus der Oberfläche (12) der Rotorblattspitze (10) hinaus erstrecken.

4. Rotorblattspitze nach Anspruch 2 oder 3, **dadurch gekennzeichnet, dass** die Vertiefungen (16) und/oder Erhöhungen (18) linsen- oder halbkugelförmig oder quaderförmig ausgebildet sind.

5. Rotorblattspitze nach einem der Ansprüche 2 bis 4, **dadurch gekennzeichnet, dass** die Vertiefungen (16) und/oder Erhöhungen (18) in einer Zick-Zack-Form angeordnet sind.

6. Rotorblattspitze nach einem der vorhergehenden Ansprüche, **dadurch gekennzeichnet, dass** der raue Oberflächenabschnitt (14) entlang der gesamten Länge (L) der Rotorblattspitze (10) angeordnet ist.

7. Rotorblattspitze nach Anspruch 6, **dadurch gekennzeichnet, dass** der streifenförmige Oberflächenabschnitt (14) eine Breite in Richtung der Profilsehne (P) im Bereich von 1 cm bis 3 cm aufweist.

8. Rotorblattspitze nach einem der vorhergehenden Ansprüche, **dadurch gekennzeichnet, dass** die Rotorblattspitze (10) einen sich entlang einer Profilnasenkante (20) erstreckenden Fortsatz (22) aufweist, wobei sich der raue Oberflächenabschnitt (14) zumindest teilweise entlang des Fortsatzes (22) erstreckt.

9. Rotorblattspitze nach einem der vorhergehenden Ansprüche, **dadurch gekennzeichnet, dass** der raue Oberflächenabschnitt (14) auf der Saugseite (S) und/oder auf der Druckseite (D) der Rotorblattspitze (10) verläuft.

10. Rotorblattspitze nach Anspruch 9, **dadurch gekennzeichnet, dass** sich der raue Oberflächenabschnitt (14) über eine Profilnasenkante (20) der Rotorblattspitze (10) hinweg auf der Saugseite (S) und der Druckseite (D) erstreckt.

11. Rotorblattspitze nach einem der vorhergehenden Ansprüche, **dadurch gekennzeichnet, dass** der raue Oberflächenabschnitt (14) in einem Metallgießverfahren gemeinsam mit der Rotorblattspitze (10) hergestellt ist.

12. Rotorblattspitze nach der Ansprüche 1 bis 10, **dadurch gekennzeichnet, dass** der raue Oberflächenabschnitt (14) durch nachträgliche Bearbeitung in die Rotorblattspitze (10) eingebracht ist.

13. Windenergieanlagenrotorblatt mit einer Rotorblattspitze (10) nach einem der vorhergehenden Ansprüche.

14. Windenergieanlagenrotorblatt nach Anspruch 13, **dadurch gekennzeichnet, dass** die Rotorblattspitze (10) auswechselbar mit einer Blattschale (32) des Windenergieanlagenrotorblatts (30) verbunden ist.

## Claims

1. A rotor blade tip for a wind turbine rotor blade (30), wherein the rotor blade tip (10) is made of metal and a surface (12) of the rotor blade tip (10) formed by the metal has a rough surface section (14), **characterized in that** the rough surface section (14) is arranged in the shape of a stripe at an even distance from a leading edge (20).

2. The rotor blade tip according to claim 1, **characterized in that** the rough surface section (14) of the rotor blade tip (10) is formed by a plurality of recesses (16) and/or increases (18) introduced into the surface (12) of the rotor blade tip (10).

3. The rotor blade tip according to claim 2, **characterized in that** the recesses (16) extend into the surface (12) of the rotor blade tip (10) between 0.1 mm and 1 mm and/or that the increases (18) extend from the surface (12) of the rotor blade tip (10) between 0.1 mm and 1 mm.

4. The rotor blade tip according to claim 2 or 3, **characterized in that** the recesses (16) and/or increases (18) are lens-shaped or hemispherical or cuboid.

5. The rotor blade tip according to one of claims 2 to 4, **characterized in that** the recesses (16) and/or increases (18) are arranged in a zig-zag shape.

6. The rotor blade tip according to one of the preceding claims, **characterized in that** the rough surface section (14) is arranged along the entire length (L) of the rotor blade tip (10).

7. The rotor blade tip according to claim 6, **characterized in that** the stripe-shaped surface section (14) has a width in the direction of the chord (P) in the range of 1 cm to 3 cm.

8. The rotor blade tip according to one of the preceding claims, **characterized in that** the rotor blade tip (10) has an extension (22) extending along a leading edge (20), wherein the rough surface section (14) extends at least partially along the extension (22).

9. The rotor blade tip according to one of the preceding claims, **characterized in that** the rough surface section (14) runs on the suction side (S) and/or on the pressure side (D) of the rotor blade tip (10).

10. The rotor blade tip according to claim 9, **characterized in that** the rough surface section (14) extends over a leading edge (20) of the rotor blade tip (10) on the suction side (S) and the pressure side (D).

11. The rotor blade tip according to one of the preceding claims, **characterized in that** the rough surface section (14) is produced together with the rotor blade tip (10) using a metal casting method.

12. The rotor blade tip according to claims 1 to 10, **characterized in that** the rough surface section (14) is introduced into the rotor blade tip (10) through subsequent processing.

13. A wind turbine rotor blade with a rotor blade tip (10) according to one of the preceding claims.

14. The wind turbine rotor blade according to claim 13, **characterized in that** the rotor blade tip (10) is connected in a replaceable manner to a blade shell (32) of the wind turbine rotor blade (30).

## Revendications

1. Extrémité de pale de rotor pour une pale de rotor d'éolienne (30), dans laquelle l'extrémité de pale de rotor (10) est fabriquée en métal et une surface supérieure (12) de l'extrémité de pale de rotor (10) formée par le métal présente une section de surface supérieure rugueuse (14), **caractérisée en ce que** la section de surface supérieure rugueuse (14) est disposée en forme de bande à une distance régulière d'une arête de nez profilé (20).

2. Extrémité de pale de rotor selon la revendication 1, **caractérisée en ce que** la section de surface supérieure rugueuse (14) de l'extrémité de pale de rotor (10) est formée par une pluralité de creux (16) et/ou de protubérances (18) intégrés dans la surface supérieure (12) de l'extrémité de pale de rotor (10).

3. Extrémité de pale de rotor selon la revendication 2, **caractérisée en ce que** les creux (16) s'étendent sur une profondeur de 0,1 mm à 1 mm dans la surface supérieure (12) de l'extrémité de pale de rotor (10) et/ou **en ce que** les protubérances (18) s'étendent sur une hauteur de 0,1 mm à 1 mm à partir de la surface supérieure (12) de l'extrémité de pale de rotor (10).

4. Extrémité de pale de rotor selon la revendication 2 ou 3, **caractérisée en ce que** les creux (16) et/ou les protubérances (18) sont conçu(e)s en forme de lentilles ou de demi-sphères ou de parallélépipèdes.

5. Extrémité de pale de rotor selon l'une des revendications 2 à 4, **caractérisée en ce que** les creux (16) et/ou les protubérances (18) sont agencé(e)s en forme de zigzags.

6. Extrémité de pale de rotor selon l'une des revendications précédentes, **caractérisée en ce que** la section de surface supérieure rugueuse (14) est agencée le long de toute la longueur (L) de l'extrémité de pale de rotor (10).

7. Extrémité de pale de rotor selon la revendication 6, **caractérisée en ce que** la section de surface supérieure rugueuse en forme de bande (14) présente une largeur de 1 cm à 3 cm dans la direction de la corde de profil (P).

8. Extrémité de pale de rotor selon l'une des revendications précédentes, **caractérisée en ce que** l'extrémité de pale de rotor (10) présente un prolongement (22) s'étendant le long d'une arête de nez profilé (20), la section de surface supérieure rugueuse (14) s'étendant au moins partiellement le long du prolongement (22).

9. Extrémité de pale de rotor selon l'une des revendications précédentes, **caractérisée en ce que** la section de surface supérieure rugueuse (14) s'étend sur le côté aspiration (S) et/ou sur le côté pression (D) de l'extrémité de pale de rotor (10).

10. Extrémité de pale de rotor selon la revendication 9, **caractérisée en ce que** la section de surface supérieure rugueuse (14) s'étend au-delà d'une arête de nez profilé (20) de l'extrémité de pale de rotor (10) sur le côté aspiration (S) et sur le côté pression (D).

11. Extrémité de pale de rotor selon l'une des revendications précédentes, **caractérisée en ce que** la section de surface supérieure rugueuse (14) est fabriquée ensemble avec l'extrémité de pale de rotor (10) à l'aide d'un procédé de coulée de métal.

12. Extrémité de pale de rotor selon les revendications 1 à 10, **caractérisée en ce que** la section de surface supérieure rugueuse (14) est intégrée dans l'extrémité de pale de rotor (10) à l'aide d'un traitement ultérieur.

13. Pale de rotor d'éolienne comprenant une extrémité de pale de rotor (10) selon l'une des revendications précédentes.

14. Pale de rotor d'éolienne selon la revendication 13, **caractérisée en ce que** l'extrémité de pale de rotor (10) est reliée de façon interchangeable à une coque de pale (32) de la pale de rotor d'éolienne (30).
